# EUROPEAN PATENT APPLICATION

(11) **EP 4 239 719 A1**
(43) Date of publication of application: **06.09.2023**
(21) Application number: 21884287.0
(22) Date of filing: 30.01.2021
(51) Int. Cl.: H01M 4/36, H01M 4/38

(54) **NEGATIVE ELECTRODE ACTIVE MATERIAL USED FOR BATTERY AND METHOD FOR FABRICATION THEREOF, AND BATTERY NEGATIVE ELECTRODE AND BATTERY**

(30) Priority: 30.10.2020 CN 202011191260
(71) Applicant: Berzelius (Nanjing) Co., Ltd., Jiangsu 210006 (CN); Berzelius (Hefei) Co., Ltd., Anhui 231582 (CN)
(72) Inventor: LUO, Shu, Nanjing Jiangsu 210006 (CN); LI, Zhe, Nanjing Jiangsu 210006 (CN); ZHA, Daosong, Nanjing Jiangsu 210006 (CN); ZHANG, Hebao, Nanjing Jiangsu 210006 (CN); WANG, Cen, Nanjing Jiangsu 210006 (CN)
(74) Representative: Kurig, Thomas
(86) International application number: PCT/CN2021/074528
(87) International publication number: WO 2022/088543

(57) **Abstract**

An anode active material for batteries comprises anode active substance particles. The anode active substance particles comprise silicon oxide compound particles including nano-silicon grains and lithium; and a composite oxide coating layer partially or entirely covering the silicon oxide compound particles and containing a composite oxide of a metal M and phosphorus, wherein the metal M includes lithium and a non-lithium metal. The anode active material has good water tolerance. A battery prepared from the anode active material has the advantages of good cycle performance, high energy density, high coulombic efficiency, good rate performance, and the like.

## Description

### Technical Field

The application relates to the field of batteries, in particular to an anode active material for batteries, a method for preparing the same, a battery anode, and a battery.

### Background

In recent years, the continuous development of various portable electronic devices and electric vehicles has put forward an increasingly urgent demand for batteries with a high energy density and a long cycle life. The anode active material of existing commercial lithium ion batteries is mainly graphite that has a low theoretical capacity (372mAh/g), thus limiting a further improvement of the energy density of the batteries. The monatomic silicon anode active material has the advantage of a high capacity (the state of intercalated lithium at room temperature is Li₁₅Si₄, and the theoretical lithium storage capacity is about 3600mAh/g), which is about ten times the theoretical capacity of the existing commercial graphite anode active material , and having a high-capacity advantage that cannot be surpassed by other anode active materials, thus having become a hotspot in research and development in recent years, and has gradually moved from the research and development in laboratories to commercial applications. At present, three types of silicon anode active materials are mainly studied and developed: composite material of monatomic silicon (including nano-silicon, porous silicon, amorphous silicon, and the like) and carbon material thereof; alloy material formed by compounding silicon with other metals (such as ferrum, manganese, nickel, chromium, cadmium, tin and copper) or non-metals (such as carbon, nitrogen, phosphorus and boron); composite material of silicon oxide and carbon material thereof. In these three structures, the monatomic silicon material has the highest theoretical capacity, thus also having the highest theoretical energy density. However, the monatomic silicon anode active material has a serious volume effect in the lithiation and delithiation process, and the rate of volume change is about 300%, which may lead to pulverization within the electrode and separation of the electrode from the current collector. In addition, the silicon anode active material may fracture ceaselessly due to continuous expansion and contraction in the battery charging and discharging process, and new interface generated in this process will be exposed to the electrolyte to form a new SEI film, so that the electrolyte will be continuously consumed, thus reducing the cycle performance of the battery. These defects severely limit the commercial application of monatomic silicon anodes.

The silicon oxide compounds contain many inactive substances, thus having a capacity lower than that of the monatomic silicon anode active material. However, due to the existence of these inactive substances, the expansion of silicon in the cycle process is effectively restrained by the inactive phase, so the silicon oxide compounds have an outstanding advantage in cycle stability. The contents in the description of the related art are merely techniques known by the applicant, and do not represent all existing techniques in the art.

### Summary

The application provides an anode active material for batteries, which has good water tolerance. Batteries prepared from the anode active material have the advantages of good cycle performance, high energy density, high coulombic efficiency, good rate performance, and the like.

According to one aspect of the application, the anode active material for batteries comprises anode active substance particles, wherein the anode active substance particles comprise: silicon oxide compound particles including nano-silicon grains and lithium; and a composite oxide coating layer partially or entirely covering the silicon oxide compound particles and containing a composite oxide of a metal M and phosphorus, wherein the metal M includes lithium and a non-lithium metal.

According to some embodiments of the application, the composite oxide coating layer is an in-situ growing layer of the composite oxide of the metal M and phosphorus. The in-situ growing layer is a continuous membraneous coating layer or a discontinuous partial coating layer formed on the surface of the silicon oxide compound particles by means of in-situ nucleation and growth on the surface of the silicon oxide compound particles by a certain method (such as a liquid phase method or a vapor phase method). In this way, the in-situ growing layer closely adheres to the surface of the silicon oxide compound particles, thus, compared with an ex-situ growth layer, forming a more compact or lattice-matched interface layer.

According to some embodiments of the application, the composite oxide coating layer contains phosphate radicals, metaphosphoric acid radicals or pyrophosphate radicals.

According to some embodiments of the application, the content of the lithium in the silicon oxide compound particles is 0.1-20wt%, preferably 2-18wt%, and more preferably 4-15wt%.

According to some embodiments of the application, the silicon oxide compound particles comprise at least one compound selected from Li₄SiO₄, Li₂SiO₃, Li₆Si₂O₇, LisSiOe and Li₂Si₂O₅.

According to some embodiments of the application, the median size of the silicon oxide compound particles is 0.2-20µm, preferably 1-15µm, and more preferably 2-10µm.

According to some embodiments of the application, the stoichiometric ratio of silicon and oxygen in the silicon oxide compound particles is 1:0.4-1:2, preferably 1:0.6-1:1.5, and more preferably 1:0.8-1:1.2.

According to some embodiments of the application, the median size of the nano-silicon grains is 0.1-35nm, preferably 0.5-20nm, and more preferably 1-15nm.

According to some embodiments of the application, the content of silicon in the anode active substance particles is 30-80wt%, preferably 35-65wt%, and more preferably 40-65wt%.

According to some embodiments of the application, the composite oxide coating layer comprises LiₓN_{y}P_{z}O_{w}, wherein N is a non-lithium metal, and x>0, y>0, z>0, w>0.

According to some embodiments of the application, the composite oxide coating layer further comprises Liₓ₁P_{y1}O_{z1} and/or Nₓ₂P_{y2}O_{z2}, wherein N is a non-lithium metal, and x1>0, x2>0, y1>0, z1>0, y2>0, z2>0.

According to some embodiments of the application, the composite oxide coating layer contains Liₓ₃P_{y3}O_{z3} and Nₓ₄P_{y4}O_{z4}, wherein N is a non-lithium metal, and x3>0, x3>0, y3>0, z3>0, y4>0, z4>0.

According to some embodiments of the application, the mass ratio of the composite oxide coating layer is less than 10wt% of the anode active substance particles, preferably less than 5wt% of the anode active substance particles, and more preferably less than 3wt% of the anode active substance particles.

According to some embodiments of the application, the composite oxide coating layer contains fast ion conductors of lithium ions, wherein the fast ion conductors of the lithium ions have a lithium-ionic conductivity greater than 10⁻⁸ S/cm at room temperature and further have a negligible electronic conductivity.

According to some embodiments of the application, the non-lithium metal comprises one or more of titanium, magnesium, aluminium, zirconium, calcium and zinc.

According to some embodiments of the application, the mass ratio of the non-lithium metal is less than 3wt% of the anode active substance particles, preferably less than 1.5wt% of the anode active substance particles, and more preferably less than 1wt% of the anode active substance particles.

According to some embodiments of the application, the anode active substance particles further comprise a carbon film layer located between the silicon oxide compound particles and the composite oxide coating layer, and partially or entirely covering the silicon oxide compound particles.

According to some embodiments of the application, the thickness of the carbon film layer is 0.001-5µm, preferably 0.005-2µm, and more preferably 0.01-1µm.

According to some embodiments of the application, the mass ratio of the carbon film layer is 0.01-20wt% of the anode active substance particles, preferably 0.1-15wt% of the anode active substance particles, and more preferably 1-12wt% of the anode active substance particles.

In another aspect, the application further provides a method for preparing a anode active material, comprising the following steps: preparing silicon oxide compound particles; doping lithium into the silicon oxide compound particles; and in-situ growing a composite oxide coating layer on the surface of the silicon oxide compound particles, wherein the composite oxide coating layer partially or entirely covers the silicon oxide compound particles and contains a composite oxide of a metal M and phosphorus, and the metal M includes lithium and a non-lithium metal.

According to some embodiments of the application, a carbon film layer is formed after the silicon oxide compound particles are prepared, and covers the surface of the silicon oxide compound particles.

According to some embodiments of the application, after the silicon oxide compound particles are coated with the carbon film layer, the lithium is doped into the silicon oxide compound particles coated with the carbon film layer, and then, the composite oxide coating layer grows in-situ.

In another aspect, the application further provides a battery anode comprising the anode active material mentioned above, wherein the anode active material is prepared through the method mentioned above.

In another aspect, the application further provides a battery comprising the battery anode mentioned above.

According to some embodiments, the anode active material for batteries provided by the invention has the electrochemical properties of high capacity, high coulombic efficiency and good cycle stability during use. In addition, the method for preparing the anode active material provided by the application is simple, low in cost, and good in repeatability. The anode active material has good water tolerance, and the battery prepared from the anode active material has the properties of good cycle performance, high energy density, good rate performance, and the like.

### Brief Description of the Drawings

Drawings constituting one part of the application are provided below to gain a further understanding of the application. Illustrative embodiments of the application and descriptions thereof are used to explain the application, and are not intended to improperly limit the application. In the drawings:
FIG. 1 is a sectional view of an anode active material according to one illustrative embodiment of the application;
FIG. 2 is a sectional view of an anode active material according to another embodiment of the application;
FIG. 3 is a flow diagram of a method for preparing an anode active material according to one illustrative embodiment of the application;
FIG. 4 is a 20,000 × SEM image of an anode active material according to Illustrative Embodiment 1 of the application;
FIG. 5 is a 20,000 × SEM image of an anode active material according to Illustrative Embodiment 2 of the application;
FIG. 6 is a 50,000 × SEM image of an anode active material according to Illustrative Embodiment 3 of the application;
FIG. 7 is a 20,000 × SEM image of an anode active material according to Illustrative Embodiment 8 of the application;
FIG. 8A is an EDX element scanogram of the anode active material according to Embodiment 2;
FIG. 8B is an EDX element scanogram of the anode active material according to Embodiment 3;
FIG. 9 is a diagram of the full-cell cycle performance of an anode active material according to one illustrative embodiment of the application.

### Detailed Description of Embodiments

As mentioned in the description of the related art, the silicon oxide compounds have the following specific problems: when lithium is initially intercalated into the material, too many side reactions occur between the surface of the particles and the electrolyte, and a thick SEI film is generated; moreover, substances that are irreversible to release lithium ions, such as lithium metasilicate and lithium oxide, are generated in the particles, thus resulting in irreversible losses of lithium ions in batteries. These two irreversible reactions reduce the initial Coulombic efficiency of batteries containing silicon oxide compounds, thus limiting the improvement of the energy density of the batteries. In addition, the silicon oxide compounds also have the problems of low ionic and electronic conductivity, low coulombic efficiency during the cycle process, and the like. In view of these problems, researchers make improvements in the following aspects:

Specifically, in order to improve the electrical conductivity of the silicon oxide compounds to obtain a high capacity and a better cycle performance, the surface of the silicon oxide compounds may be coated with a conductive material such as a carbon film. In order to improve the initial Coulombic efficiency, lithium may be doped into the silicon oxide compounds, for example, the silicon oxide compounds and lithium are mixed at a high temperature, or lithium is doped into silicon oxide compounds by an electrochemical method, or the silicon oxide compounds and lithium or an organic lithium compound, serving as a lithiation agent, are subjected to an in-situ reaction when mixed by means of high-energy mechanical mixing, or a lithium-containing compound and the silicon oxide compounds are subjected to a reaction at a high temperature to dope lithium into the silicon oxide compounds. Due to the existence of the lithium-containing compound, the material is highly alkaline, thus having poor water tolerance. So, if an anode active material containing the silicon oxide lithium compound is used in the aqueous homogenization process during actual battery production, the slurry is prone to denaturation due to the high alkalinity of the material; in addition, due to the poor water tolerance of the silicon oxide lithium compound, the material is likely to react with water, thus leading to a poor quality and a low yield during the slurry coating process.

In view of this, the application provides a novel anode active material.

The application will be described below with reference to specific embodiments.

### [Anode active material]

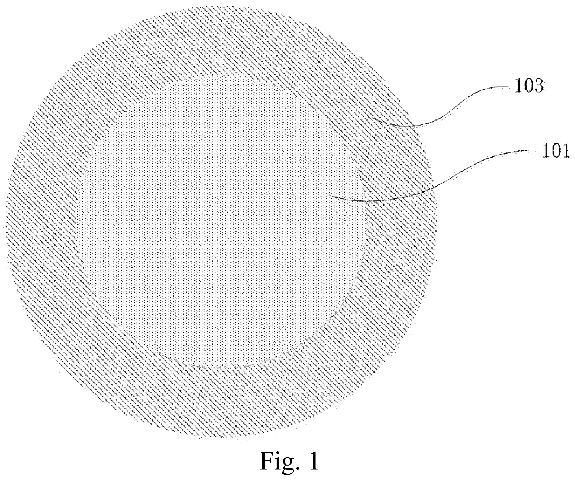

FIG. 1 is a sectional view of an anode active material according to one illustrative embodiment of the application.

Referring to FIG. 1, according to this illustrative embodiment, the application provides an anode active material for batteries. The anode active material comprises anode active substance particles, wherein the anode active substance particles comprise silicon oxide compound particles 101, and a coating layer containing a composite oxide of lithium, non-lithium metal and phosphorus 103. In some embodiments, the silicon oxide compound particles 101 contain a silicon oxide compound, nano-silicon grains and lithium. The coating layer containing a composite oxide of lithium, non-lithium metal and phosphorus 103 adheres to at least part of the surface of the silicon oxide compound particles 101.

As shown in FIG. 1, according to this illustrative embodiment, the silicon oxide compound particles 101 contain 0.1-20wt% of lithium. According to some embodiments, the lithium exists in the silicon oxide compound particles 101 in at least one form of Li₄SiO₄, Li₂SiO₃, Li₆Si₂O₇, Li₈SiO₆ and Li₂Si₂O₅. The median size of the anode active substance particles containing lithium is 0.2-20µm, preferably 1-15µm, and more preferably 2-10µm.

According to some embodiments, the content of silicon in the silicon oxide compound particles 101 is 30-80wt%, preferably 35-65wt%, and more preferably 40-65wt%.

As shown in FIG. 1, according to some embodiments, the mass ratio of the composite oxide coating layer 103 containing a metal M and phosphorus is less than 10wt% of the silicon oxide compound particles 101, preferably less than 5wt% of the silicon oxide compound particles, and more preferably less than 3wt% of the silicon oxide compound particles.

According to this illustrative embodiment, the composite oxide coating layer 103 is expressed by a chemical formula LiₓN_{y}P_{z}O_{w}, wherein N is a non-lithium metal, and x>0, y>0, z>0, w>0. According to some other embodiments, the composite oxide coating layer 103 contains LiₓN_{y}P_{z}O_{w}, and may also contain Liₓ₁P_{y1}O_{z1} and/or Nₓ₂P_{y2}O_{z2}, wherein N is a non-lithium metal, and x1>0, x2>0, y1>0, z1>0, y2>0, z2>0.

According to this illustrative embodiment, the composite oxide coating lalyer 103 contains Liₓ₃P_{y3}O_{z3} and Nₓ₄P_{y4}O_{z4}, wherein N is a non-lithium metal, and x3>0, x4>0, y3>0, z3>0, y4>0, z4>0.

The coating layer containing a composite oxide of lithium, non-lithium metal and phosphorus 103 contains fast ion conductors of lithium ions. According to this illustrative embodiment, the fast ion conductors may be regarded as a solid electrolyte, and the fast ion conductors of lithium ions contained in the anode active material in this application have a lithium-ionic conductivity greater than 10⁻⁸ S/cm and a negligible electronic conductivity. According to this illustrative embodiment, the non-lithium metal contained in the composite oxide coating layer 103 is one or more of titanium, magnesium, aluminium, zirconium, calcium and zinc. The mass ratio of the non-lithium metal is less than 3wt% of the anode active substance particles, preferably less than 1.5wt% of the anode active substance particles, and more preferably less than 1wt% of the anode active substance particles. In addition, according to some embodiments, the composite oxide coating layer 103 contains phosphate radicals, metaphosphoric acid radicals or pyrophosphate radicals.

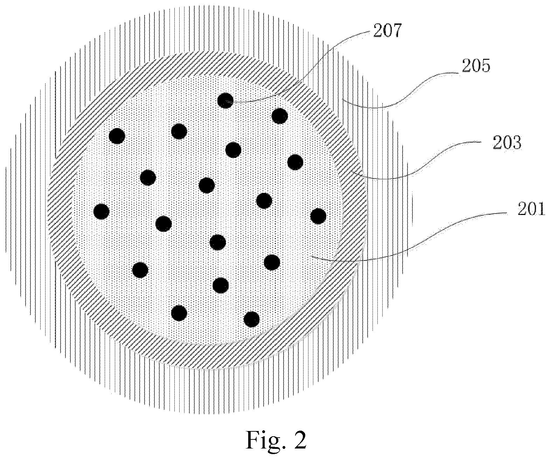

FIG. 2 is a sectional view of an anode active material according to another embodiment of the application.

Referring to FIG. 2, according to this illustrative embodiment, the anode active material of the application comprises silicon oxide compound particles 201, a carbon film layer 203, and a coating layer containing a composite oxide of lithium, non-lithium metal and phosphorus 205. According to some embodiments, the composite oxide coating layer 205 is an in-situ coating layer.

As shown in FIG. 2, according to some embodiments, the content of lithium in the silicon oxide compound particles 201 is 2-18wt%, more optionally 4-15wt%. The median size of the silicon oxide compound particles 201 is 1-15µm, more optionally 2-10µm. By pre-intercalating lithium ions into the silicon oxide compound particles, compared with anode materials containing traditional silicon oxide compounds, the initial Coulombic efficiency and cycle performance of the lithium-containing silicon oxide compound are remarkably improved.

In addition, as shown in FIG. 2, according to this illustrative embodiment, the silicon oxide compound particles 201 further comprise nano-silicon grains 207 dispersed in the silicon oxide compound particles 201. According to some embodiments, the median size of the nano-silicon grains 207 is 0.1-35nm, optionally 0.5-20nm, and more optionally 1-15nm. By adoption of this particle size, the particles expand slightly and are not prone to fracturing when lithium ions are intercalated into or removed from the particles, so that lithium ion secondary batteries using the material possess small cyclic expansion and stable cycle performance.

According to some embodiments, the content of silicon in the anode active substance particles is 35-65wt%. More optionally, the content of silicon in the anode active substance particles is 40-65wt%.

As shown in FIG. 2, according to this illustrative embodiment, the carbon layer 203 is located between the silicon oxide compound particles 201 and the coating layer containing a composite oxide of lithium, non-lithium metal and phosphorus 205, and covers the surface of the silicon oxide compound particles 201. The thickness of the carbon layer 203 is 0.001-0.5µm. According to some embodiments, the thickness of the carbon layer is preferably 0.005-2µm, more optionally 0.1-1µm. In addition, the mass ratio of the carbon film layer may be 0.01-20wt% of the anode active substance particles, optionally 0.1-15wt% of the anode active substance particles, and more optionally 1-12wt% of the anode active substance particles. The carbon layer can effectively improve the electrical conductivity of the particles, and reduce the contact resistance among particles in the anode and the contact resistance between the anode and the current collector, thus improving the charge transfer efficiency of the material, reducing the polarization and promoting the cycle stability of the lithium ion batteries.

As shown in FIG. 2, according to this illustrative embodiment, the mass ratio of the composite oxide coating layer 205 is less than 5wt% of the silicon oxide compound particles 201, more optionally less than 3wt% of the silicon oxide compound particles 201. In this embodiment, the mass ratio of the composite oxide coating layer 205 is less than 2wt% of the silicon oxide compound particles 201.

According to some embodiments, the mass ratio of the non-lithium metal in the composite oxide coating layer 205 is less than 1.5wt% of the anode active substance particles, optionally less than 1wt% of the anode active substance particles. In this embodiment, the mass ratio of the non-lithium metal is less than 0.5wt% of the anode active substance particles.

According to some embodiments, the anode active material provided by the application comprises a composite oxide coating layer growing in-situ, containing a composite oxide of lithium, non-lithium metal and phosphorus, and the coating layer has the properties of fast ion conductors of lithium ions, and can establish a fast transmission channel for lithium ions between the electrolyte and the silicon oxide compound particles, thus improving the kinetic properties of electrochemical reactions, reducing the polarization of the anode active material, and improving the fast charge-discharge performance and energy density of the batteries under high rate circumstances.

In addition, the composite oxide coating layer growing in-situ can function as artificial SEI to isolate nano-silicon grains in silicon oxide compounds from the outside electrolyte and reduce side reactions between the two, thus greatly improving the coulombic efficiency and capacity stability of the material in the long cycle process.

In addition, the coating layer containing a composite oxide of lithium, non-lithium metal and phosphorus is insoluble in water, thus greatly improving the stability of the lithium-containing silicon oxide compounds, effectively isolating the interior of the particles from water, avoiding losses of active material caused by the reaction between the particles and water in the aqueous homogenization process; moreover, the coating layer can restrain alkali release of the lithium-containing silicon oxide compounds, reduce the pH of the material and improve the stability of aqueous slurry, thus effectively avoiding the quality problems of the anode electrodes, such as pinholes, pits, non-uniform areal density and poor adhesion with the current collector, which are caused by gas generation and deterioration of the rheological property and stability of the slurry in the coating process.

### [Method for preparing anode active material]

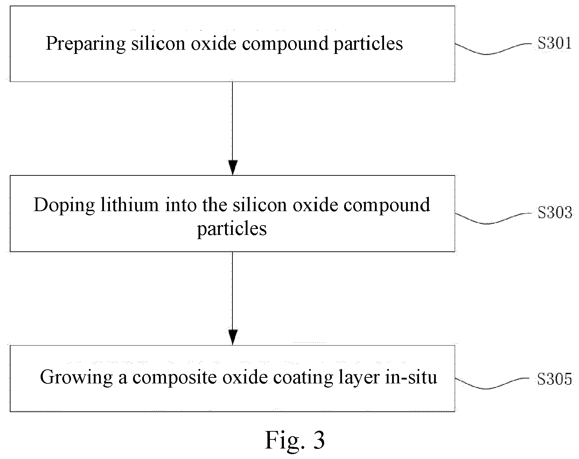

FIG. 3 is a flow diagram of a method for preparing an anode active material according to one illustrative embodiment of the application.

According to some embodiments, in S301, silicon oxide compound particles are prepared. The specific preparation process may comprise the following steps: first, a mixture of silicon powder and silicon dioxide powder is heated at a temperature of 900°C-1600°C under an inert gas atmosphere or a negative pressure condition to generate a silicon oxide gas; the gas generated by heating the raw materials precipitates on an adsorption plate; when the temperature in a reaction furnace is decreased below 100°C, the precipitate is taken out and crushed and pulverized by a ball mill or a jet mill to obtain the silicon oxide compound particles for later use. Then, S303 is performed.

According to this illustrative embodiment, anode active substance particles comprise the silicon oxide compound particles. The silicon oxide compound particles comprise a silicon oxide material. In this embodiment, the stoichiometric ratio of silicon and oxygen in the silicon oxide compound particles is 1:0.4-1:2, optionally 1:0.6-1:1.5, and more optionally 1:0.8-1:1.2. The silicon oxide compound particles further comprise a tiny amount of other impurity elements.

In S303, lithium is doped into the silicon oxide compound particles.

According to some embodiments, before lithium is doped into the silicon oxide compound particles in S303, the surface of the silicon oxide compound particles is coated with a carbon film layer.

According to this illustrative embodiment, a silicon oxide compound is a non-disproportionated silicon oxide compound, or a silicon oxide compound which has been disproportionated through heat treatment, wherein the temperature of the heat treatment for disproportionation is 600-1100°C, optionally 700-1000°C.

The carbon film layer may be directly obtained by chemical vapor deposition (CVD), wherein a carbon source adopted for CVD is a hydrocarbon compound gas, and the decomposition temperature of the hydrocarbon compound gas is 600-1100°C, preferably 750-950°C. The carbon film layer may also be obtained by carrying out a carbon source coating process and then carrying out heat treatment for carbonization under a non-oxidizing atmosphere. The carbon source coating may be carried out in any one of a mechanical fusion machine, a VC mixer, a coating machine, a spray drier, a sand mill, and a high-speed disperser. A solvent used for carbon source coating is one or a combination of several of water, methyl alcohol, ethyl alcohol, isopropanol, n-butyl alcohol, ethylene glycol, diethyl ether, acetone, N-methyl pyrrolidone, methyl butanone, tetrahydrofuran, benzene, methylbenzene, xylene, N, N-dimethyl formamide, N, N-dimethylacetamide, and trichloromethane. A carbon source may be one or a combination of several of coal asphalt, petroleum asphalt, polyvinyl alcohol, epoxy resin, polyacrylonitrile, polymethyl methacrylate, glucose, sucrose, polyacrylic acid, and polyvinyl pyrrolidone. Equipment used for the heat treatment for carbonization may be any one of a rotary furnace, a ladle furnace, a roller kiln, a pushed slab kiln, a box furnace, and a tube furnace. The temperature of the heat treatment for carbonization may be 600-1100°C, preferably 700-1000°C, and the holding time is 0.5-24 hrs. The non-oxidizing atmosphere may be provided by at least one of the following gases: nitrogen, argon, hydrogen, or helium.

According to some embodiments, the silicon oxide compound particles may be entirely or partially coated with the carbon film layer, or without the carbon film layer.

According to some embodiments, after the carbon film layer is formed, lithium is doped into the silicon oxide compound particles. Lithium doping of the silicon oxide compound particles may be realized by electrochemical doping, liquid-phase doping, or thermal doping. The atmosphere of lithium doping is a non-oxidizing atmosphere that is provided by at least one of nitrogen, argon, hydrogen, or helium.

### Lithium-doping method:

### 1. Electrochemical method

An electrochemical pool is provided, wherein the electrochemical pool comprises a bath, an anode, a cathode and a power source, and the anode and the cathode are connected to two terminals of the power source respectively. The anode is connected to a lithium source, and the cathode is connected to a container containing silicon oxide compound particles. The bath is filled with an organic solvent, and the lithium source and the container containing the silicon oxide compound particles are immersed in the organic solvent. After the power source is turned on, lithium ions are doped into the silicon oxide compound particles under the effect of an electrochemical reaction, so that silicon oxide compound particles modified by lithium doping are obtained. The organic solvent may be ethylene carbonate, propylene carbonate, butylenes carbonate, fluoroethylene carbonate, dimethyl carbonate, methyl ethyl carbonate, diethyl carbonate, ethyl acetate, propyl acetate, ethyl propionate, propyl propionate, dimethyl sulfoxide, or the like. In addition, the organic solvent contains lithium salt, which may be lithium hexafluorophosphate (LiPF₆), lithium tetrafluoroborate (LiBF₄), lithium perchlorate (LiClO₄), or the like. The lithium source may be lithium foil, or a lithium compound such as lithium carbonate, lithium oxide, lithium hydroxide, lithium cobalt oxide, lithium iron phosphate, lithium manganate, lithium vanadium phosphate and lithium nickel oxide.

### 2. Liquid-phase doping method

Lithium, an electron transfer catalyst, and silicon oxide compound particles are added to an ether solvent, continuously stirred in a non-oxidizing atmosphere, and heated to maintain a thermostatic reaction until the lithium disappears completely. Under the effect of the electron transfer catalyst, the lithium is dissolved in the ether solvent to form a coordination compound of lithium ions, which has a low reduction potential and can react with silicon oxide compounds, so the lithium ions enter into the silicon oxide compounds. The electron transfer catalyst comprises biphenyl, naphthalene, and the like. The ether solvent comprises methyl butyl ether, ethylene glycol monobutyl ether, tetrahydrofuran, glycol dimethyl ether, and the like. The temperature of the thermostatic reaction is 25-200°C. The non-oxidizing atmosphere is provided by at least one of the following gases: nitrogen, argon, hydrogen, and helium.

### 3. Thermal doping method

Silicon oxide compound particles and a lithium-containing compound are evenly mixed, and then subjected to heat treatment under a non-oxidizing atmosphere. The lithium-containing compound comprises lithium hydroxide, lithium carbonate, lithium oxide, lithium peroxide, lithium hydride, lithium nitrate, lithium acetate, lithium oxalate, and the like. Any one of a high-speed disperser, a high-speed stirring mill, a ball mill, a cone-type mixer, a spiral mixer, a stirring mixer and a VC mixer is used for mixing. Any one of a rotary furnace, a ladle furnace, a roller kiln, a pushed slab kiln, a box furnace and a tube furnace is used for heat treatment. The temperature of heat treatment is 400-900°C, preferably 550-850°C, the holding time is 0.1-12 hrs, and the temperature rise rate is greater than 0.1°C per minute and less than 20°C per minute. The non-oxidizing atmosphere is provided by at least one of the following gases: nitrogen, argon, hydrogen, or helium.

The step of lithium doping, S303, is performed after coating of the carbon film layer, so that growing of silicon grains in silicon oxide compounds is restrained in the heat treatment process. In this way, nano-sized silicon grains are evenly dispersed and are fixed in a lithium silicate compound matrix or a silicon oxide compound, which can effectively restrain the expansion of the nano-silicon grains and prevent the silicon grains from becoming larger clusters due to gradual fusion in the charge and discharge process, thus reducing the expansion of batteries in the cycle process, reducing electrical failures of the silicon materials, and guaranteeing small cell expansion and good cycle stability during long cycles of the batteries using the material. In addition, a carbon layer with better quality and improved covering integrity can be obtained if the step of carbon coating is performed before the step of lithium doping.

After the lithium doping process is finished, S305 is performed.

According to this illustrative embodiment, in S305, a composite oxide coating layer grows in-situ on the surface of the silicon oxide compound particles, where the coating layer contains a composite oxide of lithium, non-lithium metal and phosphorus. According to some embodiments, the composite oxide coating layer entirely or partially covers the surface of the lithium-containing silicon oxide compound particles.

In the step of S305, the composite oxide coating layer may grow in-situ on the surface of the lithium-containing silicon oxide compound particles by a liquid phase method or a vapor phase method. Wherein, when the liquid phase method is used for in-situ coating, a solution of a certain concentration is prepared from water-soluble or alcohol-soluble non-lithium metal salt, phosphate, or metaphosphate. Optionally, the solution of a certain concentration may further comprise water-soluble or alcohol-soluble lithium salt, and then the coating layer containing a composite oxide of lithium, non-lithium metal and phosphorus grows in-situ on the surface of the silicon oxide compound particles by a solution method.

Furthermore, according to some embodiments, after the composite oxide coating layer grows in-situ, heat treatment is conducted. In the step of the heat treatment, phosphate radicals contained in the coating are quite likely to be converted into metaphosphate radicals. Process parameters of the heat treatment are as follows: the temperature is 150-900°C, the holding time is 0.1-12 hrs, and the atmosphere is a vacuum atmosphere or a non-oxidizing atmosphere. Wherein, the non-oxidizing atmosphere is provided by at least one of the following gases: nitrogen, argon, hydrogen, or helium. In addition, the temperature of the heat treatment should not be higher than the heat-treatment temperature for lithium doping.

### [Characterization method of the anode active material]

1. Product testing: anode active materials prepared in the following embodiments and contrastive embodiments are characterized by the following equipment: a BetterSize 2000 laser particle analyzer is used to test the particle size distribution of the anode active materials; a Hitachi SU8010 scanning electron microscope is used to observe the surface topography of the anode active materials; and an EDX element tester is used to analyze the elements of the anode active materials.
2. Homogenizing and negative electrode preparation: 18 parts of the anode active material, 77 parts of artificial graphite, 2.5 parts of a conductive additive, and 2.5 parts of a binder are added for homogenizing in an aqueous system to obtain a uniform slurry. Then the slurry is coated on copper foil, followed by a drying and calendaring process to obtain a negative electrode containing the anode active material of the application.
3. Gas generation testing: a water-tolerance test is carried out on part of the aqueous slurry as follows.
   30g of the aqueous slurry is preserved at 65°C, and the time when the slurry starts to generate gas under this condition is determined. In a common aqueous homogenizing process, the temperature of the slurry is generally maintained at 25-30°C. So, the strict high temperature adopted in this patent for evaluation of slurry stability has far exceeded the condition of an actual aqueous homogenizing and coating process. Under this evaluation method, if the slurry does not generate gas within 24 hrs, it indicates that the anode active material in the slurry is well-performed and stable in water tolerance and can be used for large-scale aqueous homogenizing.
3. Half-cell evaluation: the negative electrode containing the anode active material in this application, a separator, a lithium foil and a stainless-steel gasket are sequentially stacked, adding 200 µL of electrolyte dropwise and then they are sealed to get a 2016 lithium-ion coin cell. The capacity and coulombic efficiency of the half-cell is tested by using a battery testing system from Wuhan LANHE Electronics Co., Ltd.
4. Full-cell evaluation: the negative electrode with the anode active material in this application is cut, vacuum-baked, and then wound and packed with a positive electrode and a separator into an aluminium-plastic bag of a corresponding size; then a certain amount of electrolyte is added and sealed for formation, thereby obtaining a complete 3.2Ah lithium-ion full cell. The capacity, energy density, and constant-current charge capacity ratio of the full batteries under 0.2C and 3C rates are tested by using a battery tester from Shenzhen Neware Technology Limited. The batteries are also charged and discharged for 500 cycles under a 0.7C rate to obtain the capacity retention rate.

The application will be further described below in conjunction with specific embodiments.

### Embodiment 1

500g of silicon oxide compound particles with a median size of 5µm and a silicon oxide atom ratio of 1: 1 were prepared. In a drying room with a relative humidity less than 30%, 500g of silicon oxide compound powder, 70g of metallic lithium strips, and biphenyl were added into a sealable glass container, and then methyl butyl ether was added, and the mixture was stirred under an argon atmosphere for a reaction. After that, after the methyl butyl ether in the container was removed, drying was carried out to obtain the powder, which was then subjected to heat treatment under the argon atmosphere, maintained at 300°C for 2 hrs, and naturally cooled to obtain lithium-doped silicon oxide compound powder.

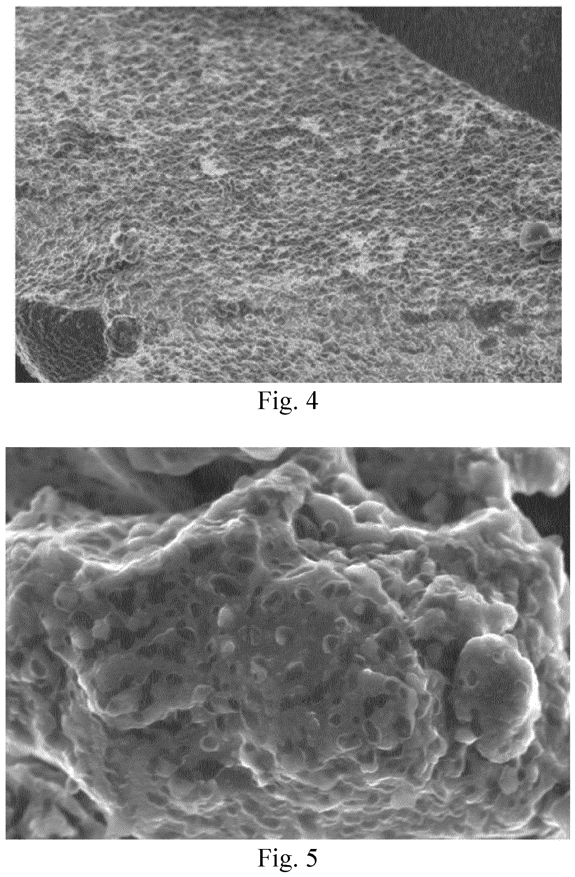

500g of the lithium-doped silicon oxide compound powder obtained in the preceding step was added to a lithium dihydrogen phosphate aqueous solution, and then the aqueous solution containing water-soluble magnesium salt was dropwise added to the dispersion. After the reaction was finished, the powder was separated from the solution by extraction filtration and was then dried to obtain lithium-containing silicon oxide compound particles with a co-precipitated coating layer on the surface with Li₃PO₄ and Mg₃(PO₄)₂). It is found, by a weighing analysis, that the weight of the material is increased by 7wt%, wherein the mass of magnesium accounts for 2wt% that of the lithium-containing silicon oxide compound particles. FIG. 4 is an SEM image of the final product obtained in Embodiment 1, and as can be clearly seen from FIG. 4, a complete composite coating layer grows in-situ on the surface of the lithium-containing silicon oxide compound particles.

18 parts of the anode active material, 77 parts of artificial graphite, 2.5 parts of a conductive additive, and 2.5 parts of a binder were homogenized in an aqueous system, part of obtained aqueous slurry was subjected to a water-tolerance test, and the rest of the aqueous slurry was coated and then dried to obtain a silicon-containing electrode.

About 30g of the slurry was preserved in a 65°C thermostatic water bath, and the time when the slurry starts to generate gas was monitored. Under this severe condition, the slurry did not generate any gas in more than one week in this embodiment.

In this embodiment, the results of half cells are as follows: the reversible specific capacity is 566.4mAh/g, and the initial Coulombic efficiency is 88%.

In this embodiment, full-cell evaluation results of the anode active material are as follows: the volume energy density under a 0.2C rate is 764.7Wh/L, the volume energy density under a 3C rate is 89.30% of that under 0.2C rate, and the capacity retention after 500 cycles is 79.3%.

### Embodiment 2

1000g of silicon oxide compound particles with a median size of 5µm were weighed and placed in a CVD furnace. A coating reaction was carried out at 950°C with acetylene as a carbon source to obtain silicon oxide compound particles coated with a complete carbon film layer.

500g of the silicon oxide compound particles coated with the complete carbon film layer were obtained, and lithium was doped into the silicon oxide compound particles coated with the complete carbon film layer through a method similar to that in Embodiment 1, wherein the amount of added lithium strips was 60g; then the silicon oxide compound particles were subjected to heat treatment at a temperature of 550°C and was maintained at the temperature for 2 hrs to obtain lithium-containing silicon oxide compound particles coated with a carbon film.

500g of the lithium-containing silicon oxide compound particles were obtained, and a composite oxide coating layer was formed by a spray-drying coating process.

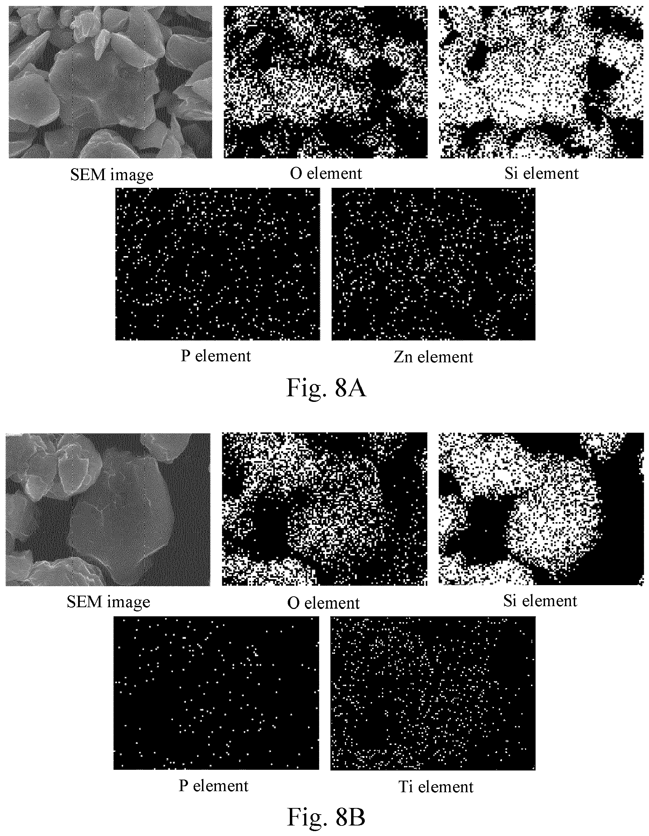

The lithium-containing silicon oxide compound particles, water-soluble phosphate, water-soluble lithium salt, water-soluble zinc salt, and polyvinylpyrrolidone (PVP) were dispersed in deionized water at a high speed to obtain slurry, and then the slurry was spray-dried. Next, the obtained powder was heated at 400°C for 4 hrs under an argon atmosphere to obtain lithium-containing silicon oxide compound particles with a lithium-zinc-phosphorus composite oxide coating layer on the surface, wherein the coating layer contains lithium phosphate and zinc phosphate. It can be clearly seen, by analysing the SEM image (shown in FIG. 5), that a composite coating layer grows in-situ on the surface of the lithium-containing silicon oxide compound particles. It is found, by a weighing analysis, that the weight of the material is increased by 2wt% after this coating step, wherein the mass of zinc accounts for 0.5wt% that of the lithium-containing silicon oxide compound particles. It can be seen, from the EDX mapping, that the coating layer contains zinc and phosphorus, as shown in FIG. 8A.

Aqueous slurry containing the material did not generate any gas in more than one week during an acceleration test at 65°C.

Similar to the above embodiment, an anode containing the anode active material of the application was prepared.

In this embodiment, the results of half-cells are as follows: the reversible specific capacity is 587.9mAh/g, and the initial Coulombic efficiency is 89.3%.

In this embodiment, full-cell evaluation results of the anode active material are as follows: the volume energy density under a 0.2C rate is 801.9Wh/L, the volume energy density under a 3C rate is 93% of that under 0.2C rate, and the capacity retention after 500 cycles is 84.8%.

### Embodiment 3

1000g of silicon oxide particles with a median size of 5µm were weighed and placed in a CVD furnace. A coating reaction was carried out at 950°C with acetylene as a carbon source to obtain silicon oxide compound particles coated with a complete carbon film layer.

Next, lithium doping was carried out by a thermal doping method. Specifically, 500g of the silicon oxide compound particles were mixed with 68.4g of lithium hydride, the mixed powder was subjected to heat treatment under an argon atmosphere, maintained at 650°C for 6 hrs, and naturally cooled to obtain a lithium-containing silicon oxide compound coated with a carbon film.

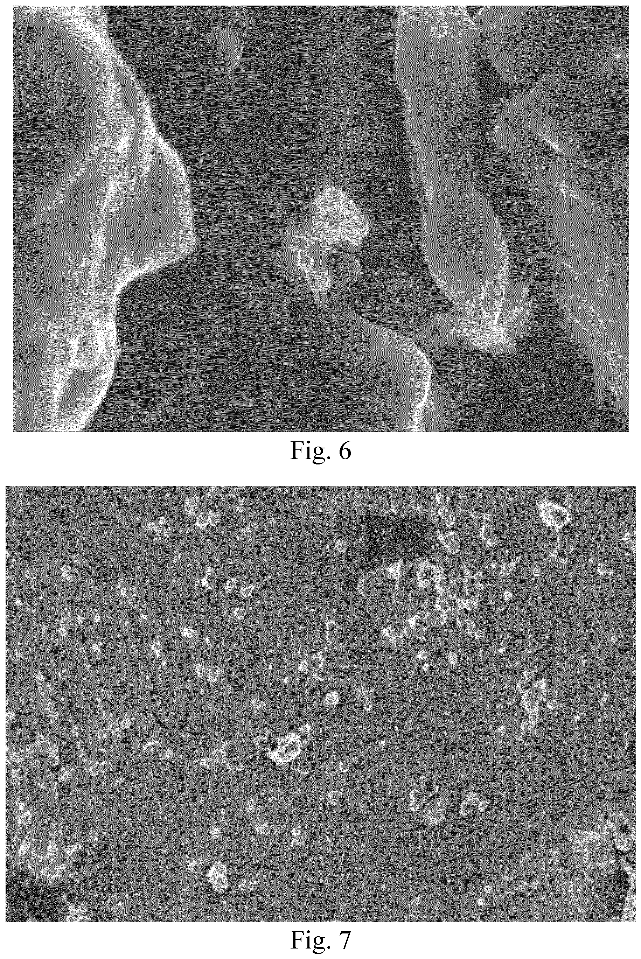

500g of the lithium-containing silicon oxide compound particles were obtained, and a composite oxide coating layer was formed by a spray-drying coating process similar to that in Embodiment 2. Wherein, water-soluble phosphate, water-soluble lithium salt and tetrabutyl titanate were used as a precursor. After spray-drying, the silicon oxide compound particles were subjected to heat treatment by being maintained at 650°C for 4 hrs to obtain lithium-containing silicon oxide compound particles coated with a lithium-titanium-phosphorus composite coating layer. It can be clearly seen, by analyzing the SEM image (shown in FIG. 6), that a composite coating layer grows in-situ on the surface of the lithium-containing silicon oxide compound particles. It is found, by a weighing analysis, that the weight of the material is increased by 1wt% after this coating step, wherein the mass of zinc accounts for 0.25wt% of the lithium-containing silicon oxide compound particles. It can be seen, from the EDX mapping (FIG. 8B), that the coating layer contains titanium and phosphorus.

Aqueous slurry containing the material did not generate any gas in more than one week during an acceleration test at 65°C.

Similar to the above embodiment, an anode containing the anode active material of the application was prepared.

In this embodiment, the results of half cells are as follows: the reversible specific capacity is 578.6mAh/g, and the initial Coulombic efficiency is 91.2%.

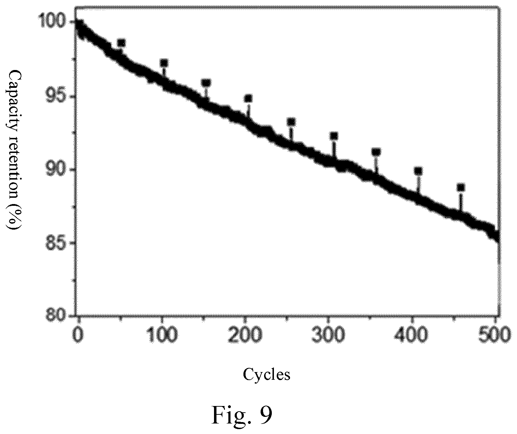

In this embodiment, full-cell evaluation results of the anode active material are as follows: the volume energy density under a 0.2C rate is 818Wh/L, the volume energy density under a 3C rate is 95.1% of that under 0.2C rate, the constant-current charge capacity ratio under 3C rate is 84.8%, and the capacity retention after 500 cycles is 85.7% (as shown in FIG. 9).

### Embodiment 4

1000g of silicon oxide particles with a median size of 5µm and 50g of coal asphalt powder were evenly mixed by a dry method, and were then heated and stirred to obtain a silicon oxide compound material coated with coal asphalt. The silicon oxide compound material was heated to 1000°C under a nitrogen atmosphere to carbonize the coal asphalt. The material was cooled and then screened with a 500-mesh screen to obtain silicon oxide compound powder coated with a carbon film.

Next, lithium doping was carried out by a thermal doping method similar to that in Embodiment 3, the amount of lithium hydride was adjusted to 45.6g, and heat treatment was carried out by maintaining the temperature at 850°C for 3 hrs to obtain a lithium-containing silicon oxide compound coated with a carbon film.

Next, a composite oxide coating layer was formed by a spray-drying coating process similar to that in Embodiment 3. Wherein, after spray-drying, heat treatment was conducted by maintaining the temperature at 850°C for 2 hrs, so that the LiTi₂(PO₄)₃ composite coating layer was obtained.

It is found, by a weighing analysis, that the weight of the material is increased by 3wt% after this coating step, wherein the mass of titanium accounts for 0.75wt% that of lithium-containing silicon oxide compound particles.

Aqueous slurry containing the material did not generate any gas in more than one week during an acceleration test at 65 °C.

Similar to the above embodiment, an anode containing the anode active material of the application was prepared.

In this embodiment, the results of half cells are as follows: the reversible specific capacity is 554.8mAh/g, and the initial Coulombic efficiency is 90.8%.

In this embodiment, full-cell evaluation results of the anode active material are as follows: the volume energy density under a 0.2C rate is 784.9Wh/L, the volume energy density under a 3C rate is 92.8% of that under 0.2C rate, and the capacity retention after 500 cycles is 80.6%.

### Embodiment 5

Compared with Embodiment 4, the same raw materials and the same carbon film coating process were adopted in this embodiment. Then, the silicon oxide compound was doped with lithium by an electrochemical lithium intercalating method, wherein the mass of the doped lithium accounts for 7% of the silicon oxide compound.

500g of the material prepared in the preceding step was added to a phosphate aqueous solution. Next, the aqueous solution containing water-soluble magnesium salt was dropwise added at a constant rate. After the reaction was finished, the powder was separated from the solution by an extraction filtration method, and then the powder was dried to obtain lithium-containing silicon oxide compound particles with a lithium-magnesium-phosphorus coating layer on the surface.

It is found, by a weighing analysis, that the weight of the material is increased by 5wt% after this coating step, wherein the mass of magnesium accounts for 1wt% that of lithium-containing silicon oxide compound particles.

Aqueous slurry containing the material did not generate any gas in more than one week during an acceleration test at 65°C.

Similar to the above embodiment, an anode containing the anode active material of the application was prepared.

In this embodiment, the results of half cells are as follows: the reversible specific capacity is 585mAh/g, and the initial Coulombic efficiency is 86.8%.

In this embodiment, full-cell evaluation results of the anode active material are as follows: the volume energy density under a 0.2C rate is 771.1Wh/L, the volume energy density under a 3C rate is 90.6% of that under 0.2C rate, and the capacity retention after 500 cycles is 81.8%.

### Embodiment 6

1000g of silicon oxide particles with a median size of 5µm were weighed and coated with a carbon film by a process similar to that in Embodiment 2 to obtain carbon-coated silicon oxide compounds. Then, the carbon-coated silicon oxide compounds were doped with lithium by a method similar to that in Embodiment 2, wherein the amount of added lithium was 50g. Next, heat treatment was carried out in a tube furnace by maintaining the temperature at 600°C for 2 hrs to obtain lithium-containing silicon oxide compound particles coated with the carbon film.

Then, 500g of the lithium-containing silicon oxide compound particles prepared in the preceding step were added to an aqueous solution containing phosphate. Next, the aqueous solution with aluminium salt was dropwise added at a constant rate. After the reaction was finished, the powder was separated from the solution by an extraction filtration method, and then the powder was dried to obtain lithium-containing silicon oxide compound particles with a lithium-aluminium-phosphorus composite coating layer on the surface.

It is found, by a weighing analysis, that the weight of the material is increased by 0.2wt% after this coating step, wherein the mass of aluminium accounts for 0.03wt% that of the lithium-containing silicon oxide compound particles.

Aqueous slurry containing the material did not generate any gas in 36 hrs during an acceleration test at 65 °C.

Similar to the above embodiment, an anode containing the anode active material of the application was prepared.

In this embodiment, the results of half cells are as follows: the reversible specific capacity is 599.8mAh/g, and the initial Coulombic efficiency is 89.2%.

In this embodiment, full-cell evaluation results of the anode active material are as follows: the volume energy density under a 0.2C rate is 806.2Wh/L, the volume energy density under a 3C rate is 95.4% of that under 0.2C rate, and the capacity retention after 500 cycles is 86.3%.

### Embodiment 7

1000g of silicon oxide particles with a median size of 5µm were weighed and were coated with a carbon film by a process similar to that in Embodiment 4 to obtain carbon-coated silicon oxide compound particles.

Next, lithium doping was carried out by a thermal doping method. Specifically, 500g of the particles were mixed with 85.7g of lithium hydroxide, then mixed powder was placed in a tube furnace under an argon atmosphere and was heated to 900°C at a rate of 10°C/min and maintained at this temperature for 3 hrs, then the mixed powder was taken out of the tube furnace after being cooled naturally, and was then screened with a 500-mesh screen to obtain lithium-containing silicon oxide compounds coated with a carbon film.

The lithium-containing silicon oxide compound particles were processed to a spray-drying coating process similar to that in Embodiment 4 to form a lithium-titanium-phosphorus composite oxide coating layer. After spray-drying, heat treatment was carried out by maintaining the temperature at 850°C for 2 hrs to obtain lithium-containing silicon oxide compound particles coated with the lithium-titanium-phosphorus composite oxide coating layer.

It is found, by a weighing analysis, that the weight of the material is increased by 6wt% after this coating step, wherein the mass of titanium accounts for 1.5wt% of the lithium-containing silicon oxide compound particles.

Aqueous slurry containing the material did not generate any gas in more than one week during an acceleration test at 65 °C.

Similar to the above embodiment, an anode containing the anode active material of the application was prepared.

In this embodiment, the results of half cells are as follows: the reversible specific capacity is 537.9mAh/g, and the initial Coulombic efficiency is 90.4%.

In this embodiment, full-cell evaluation results of the anode active material are as follows: the volume energy density under a 0.2C rate is 768Wh/L, the volume energy density under a 3C rate is 88.8% of that under 0.2C rate, and the capacity retention after 500 cycles is 76.3%.

### Embodiment 8

Similar to Embodiment 3, 1000g of silicon oxide particles with a median size of 5µm were weighed and processed by the same carbon film coating process and the same lithium doping process to obtain lithium-containing silicon oxide compound powder coated with a carbon film.

500g of lithium-containing silicon oxide compound particles, 5g of LiTi₂(PO₄)₃ powder, and a solvent were mixed, stirred and dispersed, then the solvent was removed by extraction filtration, and mixed powder was dried in vacuum at 100°C to enable the LiTi₂(PO₄)₃ powder to dispersedly adhere to the surface of the silicon oxide compound particles to obtain lithium-containing silicon oxide compound particles with the surface coated with LiTi₂(PO₄)₃ particles and a carbon film (as shown in FIG. 7).

It is found, by a weighing analysis, that the weight of the material is increased by 1wt% after this coating step, wherein the mass of titanium accounts for 0.25% that of the lithium-containing silicon oxide compound particles.

Aqueous slurry containing the material started to generate gas in about 12 hrs during an acceleration test at 65 °C.

Similar to the above embodiment, an anode containing the anode active material of the application was prepared.

In this embodiment, the results of half cells are as follows: the reversible specific capacity is 560mAh/g, and the initial Coulombic efficiency is 88.2%.

In this embodiment, full-cell evaluation results of the anode active material are as follows: the volume energy density under a 0.2C rate is 778.5Wh/L, the volume energy density under a 3C rate is 86.3% of that under 0.2C rate, the constant-current charge capacity ratio under the 3C charge rate is 78.82%, and the capacity retention after 500 cycles is 72.5%.

### Contrastive Embodiment 1

This contrastive embodiment was similar to Embodiment 2 and differed from Embodiment 2 in that the process of forming the composite oxide coating layer was omitted, so the product obtained in this contrastive embodiment was a lithium-containing silicon oxide compound coated with a carbon film.

During an acceleration test at 65°C, an aqueous slurry containing the material started to generate gas severely in 1 hr. Due to the poor stability of the slurry, the problems of gas generation and deterioration of the rheological property occurred during the homogenizing and coating process, which leads to poor quality of the electrode with defects of too many pits, poor adhesion and powder peeling-off, thus greatly affecting the performance of batteries.

In this embodiment, the results of half cells are as follows: the reversible specific capacity is 580.7mAh/g, and the initial Coulombic efficiency is 85.1%.

In this embodiment, full-cell evaluation results of the anode active material are as follows: the volume energy density under a 0.2C rate is 759.5Wh/L, the volume energy density under a 3C rate is 82.8% of that under 0.2C rate, the retention rate of a battery starts to attenuate rapidly when the charge-discharge cycles of the battery are less than 350, and the capacity retention after 500 cycles is 50%.

### Contrastive Embodiment 2

This contrastive embodiment was similar to Embodiment 6, and differed from Embodiment 6 in that the aluminium salt solution is not added. As a result, the lithium-phosphorus composite oxide coating layer was formed. It is found, by a weighing analysis, that the weight of the material is increased by 0.2wt% after this coating step. The product obtained in this contrastive embodiment is lithium-containing silicon oxide compound particles coated with the lithium-phosphorus oxide coating layer and a carbon film.

During an acceleration test at 65°C, an aqueous slurry containing the material started to generate gas severely in 6 hrs, and the rheological property of the slurry changed, so the electrode prepared from this material has the defects of a few pits, poor adhesion and powder peeling-off, which affect the performance of batteries.

In this embodiment, the results of half cells are as follows: the reversible specific capacity is 561mAh/g, and the initial Coulombic efficiency is 87.7%.

In this embodiment, full-cell evaluation results of the anode active material are as follows: the volume energy density under a 0.2C rate is 774.3Wh/L, the volume energy density under a 3C rate is 88.6% of that under 0.2C rate, and the capacity retention after 500 cycles is 67.1%.

### Contrastive Embodiment 3

1000g of silicon oxide particles with a median size of 5µm were weighed and placed in a CVD furnace. A coating reaction was carried out at 950°C with acetylene as a carbon source to obtain silicon oxide compound particles coated with a complete carbon film layer. Next, lithium doping was carried out by a thermal doping method. Specifically, 500g of the silicon oxide compound particles and 68.4g of lithium hydride were mixed, then subjected to heat treatment under an argon atmosphere, maintained at 700°C for 3 hrs, and then naturally cooled; and next, the material was taken out of the tube furnace and was screened by a 500-mesh screen to obtain lithium-containing silicon oxide compounds coated with a carbon film.

500g of lithium-containing silicon oxide compound particles, an aluminium-phosphorus composite oxide, and a solvent were mixed and stirred for 30 minutes. Pure water was used as a solvent, wherein the amount of the pure water was 5 times that of the silicon oxide compound particles. The aluminium-phosphorus composite oxide was a mixture of AlPO₄ and Al(PO₃)₃. The AlPO₄ contained 55.46% of phosphorus pentoxide and 44.54% of aluminium oxide. The Al(PO₃)₃ contained 77.82% of phosphorus pentoxide and 22.18% of aluminium oxide. The median size of the aluminium-phosphorus composite oxide was 0.8µm. After the mixture was stirred and dispersed, the solvent was removed by extraction filtration, and then drying was carried out at 100°C in vacuum to enable the aluminium-phosphorus composite oxide to adhere to the surface of the silicon oxide compound particles in a manner that the mass ratio of the phosphorus pentoxide and the aluminium oxide was 1:70.

It is found, by a weighing analysis, that the weight of the material is increased by 1.5wt% after this coating step.

During an acceleration test at 65°C, an aqueous slurry containing the material started to generate gas severely in 3 hrs, and the rheological property of the slurry changed, so the electrode prepared from this material has the defects of a few pits, poor adhesion and powder peeling-off, which affect the performance of batteries.

Similar to the above embodiment, an anode containing the anode active material of the application was prepared.

In this embodiment, the results of half cells are as follows: the reversible specific capacity is 556.4mAh/g, and the initial Coulombic efficiency is 86.7%.

In this embodiment, full-cell evaluation results of the anode active material are as follows: the volume energy density under a 0.2C rate is 767.4Wh/L, the volume energy density under a 3C rate is 79.5% of that under 0.2C rate, the retention rate of a battery starts to attenuate rapidly when the charge-discharge cycles of the battery are less than 400, and the capacity retention after 500 cycles is 64.3%.

### Contrastive Embodiment 4

Similar to Embodiment 1, the same silicon oxide compound raw materials and the same lithium doping process were adopted in this contrastive embodiment to obtain lithium-containing silicon oxide compound powder.

500g of the lithium-containing silicon oxide compound powder obtained in the preceding step was weighed and added to a lithium dihydrogen phosphate aqueous solution. Next, the aqueous solution containing soluble magnesium salt was dropwise added at a constant rate. After the reaction was finished, the powder was separated from the solution by extraction filtration, and then the powder was dried to obtain lithium-containing silicon oxide compound particles with a co-precipitated coating on the surface with lithium phosphate and magnesium phosphate.

It is found, by a weighing analysis, that the weight of the material is increased by 14wt% after this coating step, wherein the mass of magnesium accounts for 4wt% of the lithium-containing silicon oxide compound particles.

Aqueous slurry containing the material did not generate gas in more than one week during an acceleration test at 65 °C.

Similar to the above embodiment, an anode containing the anode active material of the application was prepared.

In this embodiment, the results of half cells are as follows: the reversible specific capacity is 524mAh/g, and the initial Coulombic efficiency is 84.2%.

In this embodiment, full-cell evaluation results of the anode active material are as follows: the volume energy density under a 0.2C rate is 721.3Wh/L, the volume energy density under a 3C rate is 72.1% of that under 0.2C rate, the retention rate of a battery starts to attenuate rapidly when the charge-discharge cycles of the battery are less than 350, and the capacity retention after 500 cycles is 59.3%.

According to some embodiments, a coating layer containing a composite oxide of lithium, non-lithium metal and phosphorus grows in-situ on the surface of the anode active material of the application, wherein metal elements include lithium and a non-lithium metal; and the composite oxide coating layer contains fast conductors of lithium ions, so the composite oxide coating layer will not hinder the transmission of lithium ions and can serve as a good conductor of lithium ions, thus reducing the polarization of the anode active material and improving the fast charge-discharge performance and energy density under high rate.

According to some embodiments, the coating layer containing a composite oxide of lithium, non-lithium metal and phosphorus is insoluble in water, thus greatly improving the stability of the lithium-containing silicon oxide compounds, effectively isolating the interior of the particles from water, avoiding losses of active material caused by the reaction between the particles and water in the aqueous homogenization process; moreover, the coating layer can restrain alkali release of the lithium-containing silicon oxide compounds improve the stability of aqueous slurry, thus effectively avoiding the quality problems of the anode electrodes, such as pinholes, pits, non-uniform areal density and poor adhesion with the current collector, which are caused by gas generation and deterioration of the rheological property and stability of the slurry in the coating process.

According to some embodiments, the composite oxide coating layer growing in-situ can function as artificial SEI to isolate nano-silicon grains in silicon oxide compounds from the outside electrolyte and reduce side reactions between the two, thus greatly improving the coulombic efficiency and capacity stability of the material in the long cycle process.

According to some embodiments, the nano-silicon grains in the lithium-containing silicon oxide compound particles are evenly dispersed and fixed in a lithium silicate compound matrix or a silicon oxide compound matrix that can effectively restrain and buffer the expansion of the nano-silicon grains and prevent the silicon particles from becoming larger clusters due to gradual fusion in the repeated charge-discharge process, which may otherwise cause greater expansions and fractures of the particles.. Thus, a lithium ion secondary battery prepared from the anode active material provided by the application has the advantages of small cycle expansion, good cycle stability, high energy density, and the like.

Obviously, the above embodiments are merely examples used for clearly explaining the application, and are not intended to limit the implementations of the application. Those ordinarily skilled in the art can make other variations or alterations on the basis of the above description, and not all implementations are exhausted here. All obvious variations or alterations derived from the above embodiments shall fall within the protection scope of the application.

## Claims

1. An anode active material for batteries, comprising anode active substance particles, wherein the anode active substance particles comprise silicon oxide compound particles including nano-silicon grains and lithium, and a composite oxide coating layer partially or entirely covering the silicon oxide compound particles and containing a composite oxide of a metal M and phosphorus, and the metal M comprises lithium and a non-lithium metal.

2. The anode active material of Claim 1, wherein the composite oxide coating layer is an in-situ growing layer of the composite oxide of the metal M and phosphorus.

3. The anode active material of Claim 1, wherein a content of the lithium in the silicon oxide compound particles is 0.1-20wt%.

4. The anode active material of Claim 3, wherein the content of the lithium in the silicon oxide compound particles is 2-18wt%.

5. The anode active material of Claim 4, wherein the content of the lithium in the silicon oxide compound particles is 4-15wt%.

6. The anode active material of Claim 3, wherein the silicon oxide compound particles comprise at least one compound selected from Li₄SiO₄, Li₂SiO₃, Li₆Si₂O₇, Li₈SiO₆ and Li₂Si₂O₅.

7. The anode active material of Claim 1, wherein a median size of the silicon oxide compound particles is 0.2-20µm.

8. The anode active material of Claim 7, wherein the median size of the silicon oxide compound particles is 1-15µm.

9. The anode active material of Claim 8, wherein the median size of the silicon oxide compound particles is 2-10µm.

10. The anode active material of Claim 1, wherein a median size of the nano-silicon grains is 0.1-35nm.

11. The anode active material of Claim 10, wherein the median size of the nano-silicon grain particles is 0.5-20nm.

12. The anode active material of Claim 11, wherein the median size of the nano-silicon grain particles is 1-15nm.

13. The anode active material of Claim 1, wherein a content of silicon in the anode active substance particles is 30-80wt%.

14. The anode active material of Claim 13, wherein the content of silicon in the anode active substance particles is 35-65wt%.

15. The anode active material of Claim 14, wherein the content of silicon in the anode active substance particles is 40-65wt%.

16. The anode active material of Claim 1, wherein the composite oxide coating layer comprises LiₓN_{y}P_{z}O_{w}, wherein N is a non-lithium metal, and x>0, y>0, z>0, w>0.

17. The anode active material of Claim 16, wherein the composite oxide coating layer further comprises Liₓ₁P_{y1}O_{z1} and/or Nₓ₂P_{y2}O_{z2}, wherein N is a non-lithium metal, and x1>0, x2>0, y1>0, z1>0, y2>0, z2>0.

18. The anode active material of Claim 1, wherein the composite oxide coating layer contains Liₓ₃P_{y3}O_{z3} and Nₓ₄P_{y4}O_{z4}, wherein N is a non-lithium metal, and x3>0, x4>0, y3>0, z3>0, y4>0, z4>0.

19. The anode active material of Claim 1, wherein a mass ratio of the composite oxide coating layer is less than 10wt% of the anode active substance particles.

20. The anode active material of Claim 19, wherein the mass ratio of the composite oxide coating layer is less than 5wt% of the anode active substance particles.

21. The anode active material of Claim 20, wherein the mass ratio of the composite oxide coating layer is less than 3wt% of the anode active substance particles.

22. The anode active material of Claim 1, wherein the composite oxide coating layer contains fast ion conductors of lithium ions, having a lithium-ionic conductivity greater than 10⁻⁸ S/cm at room temperature.

23. The anode active material of Claim 1, wherein the non-lithium metal comprises one or more of titanium, magnesium, aluminium, zirconium, calcium and zinc.

24. The anode active material of Claim 1, wherein a mass ratio of the non-lithium metal is less than 3wt% of the anode active substance particles.

25. The anode active material of Claim 24, wherein the mass ratio of the non-lithium metal is less than 1.5wt% of the anode active substance particles.

26. The anode active material of Claim 25, wherein the mass ratio of the non-lithium metal is less than 1wt% of the anode active substance particles.

27. The anode active material of Claim 1, wherein the anode active substance particles further comprise a carbon film layer located between the silicon oxide compound particles and the composite oxide coating layer, and partially or entirely covering the silicon oxide compound particles.

28. The anode active material of Claim 27, wherein a thickness of the carbon film layer is 0.001-5µm.

29. The anode active material of Claim 28, wherein the thickness of the carbon film layer is 0.005-2µm.

30. The anode active material of Claim 29, wherein the thickness of the carbon film layer is 0.01-1µm.

31. The anode active material of Claim 27, wherein a mass ratio of the carbon film layer is 0.01-20wt% of the anode active substance particles.

32. The anode active material of Claim 31, wherein the mass ratio of the carbon film layer is 0.1-15wt% of the anode active substance particles.

33. The anode active material of Claim 32, wherein the mass ratio of the carbon film layer is 1-12wt% of the anode active substance particles.

34. A method for preparing an anode active material, comprising:
preparing silicon oxide compound particles;
doping lithium into the silicon oxide compound particles; and
in-situ growing a composite oxide coating layer on the surface of the silicon oxide compound particles,
wherein the composite oxide coating layer partially or entirely covers the silicon oxide compound particles and contains a composite oxide of a metal M and phosphorus, and the metal M includes lithium and a non-lithium metal.

35. The method of Claim 34, further comprising:
forming a carbon film layer covering the surface of the silicon oxide compound particles before the in-situ growing of the composite oxide coating layer on the surface of the silicon oxide compound particles, so that silicon oxide compound particles with the carbon film layer are formed.

36. The method of Claim 35, wherein after the silicon oxide compound particles are coated with the carbon film layer, the lithium is doped into the silicon oxide compound particles with the carbon film layer.

37. A battery anode, comprising the anode active material of any one of Claims 1-33, wherein the anode active material is prepared through the method of any one of Claims 34-36.

38. A battery, comprising the battery anode of Claim 37.
